# EUROPEAN PATENT SPECIFICATION

(11) **EP 2 971 209 B1**
(45) Date of publication and mention of the grant of the patent: **05.04.2017**
(21) Application number: 14706477.8
(22) Date of filing: 14.02.2014
(51) Int. Cl.: C22C 38/00

(54) **HIGH STRENGTH HOT DIP GALVANISED COMPLEX PHASE STEEL STRIP**
HOCHFESTES FEUERVERZINKTES BLECH AUS KOMPLEXPHASENSTAHL
BANDE DÝACIER À PHASE COMPLEXE GALVANISÉ À CHAUD HAUTE RÉSISTANCE

(30) Priority: 11.03.2013 EP 13001215
(43) Date of publication of application: 20.01.2016
(73) Proprietor: Tata Steel IJmuiden BV, NL-1951 JZ VELSEN-NOORD (NL)
(72) Inventor: ENNIS, Bernard, Leo, NL-1951 JZ Velsen-Noord (NL)
(74) Representative: Kruit, Jan
(86) International application number: PCT/EP2014/000400
(87) International publication number: WO 2014/139625

(56) References cited:
- EP-A1- 1 808 505
- WO-A1-2011/076383
- JP-A- 2004 115 843
- JP-A- 2011 153 336

## Description

The invention relates to a high strength hot dip galvanised complex phase steel strip having improved formability, such as used in the automotive industry.

Such steel strips are e.g. disclosed in EP 1 808 505 A1.

Prior art complex phase steel materials have shown an improved edge ductility as indicated by hole expansion coefficient (HEC) and Erichsen Index (EI) values compared to dual phase steel grades. However, generally this improvement was achieved at the expense of more general ductility parameters like maximum uniform elongation and maximum total elongation. For example known CP800 steel grades with Rp0.2>580 MPa have a maximum uniform elongation of 8% and a maximum total elongation of about 10%. As a consequence the complexity of shaped articles manufactured from such steel grades e.g. obtainable by deep drawing and stamping is limited.

Therefore the present invention aims at providing a high strength steel strip having a complex phase microstructure, which shows an improved versatility regarding the shape complexity of articles made from such a strip.

It is an object of the present invention to provide a high strength steel strip showing a complex phase microstructure and having an improved ductility.

Another object of the present invention is to provide such a steel strip, which essentially retains the edge ductility performance at a sufficient level.

Yet another object of the present invention is to provide a manufacturing method for manufacturing such a steel strip.

According to the invention a high strength hot dip galvanised complex phase steel strip is provided, the strip consisting, in mass percent, of the following elements:
0.13 - 0.19% C
1.70 - 2.50 % Mn
max 0.15 % Si
0.40 - 1.00 % Al
0.05 - 0.25 % Cr
0.01 - 0.05 % Nb
max 0.10 % P
max 0.004 % Ca
max 0.05 % S
max 0.007 % N
and optionally at least one of the following elements:
max 0.50 % Ti
max 0.40 % V
max 0.50 % Mo
max 0.50 % Ni
max 0.50 % Cu
max 0.005 % B
the balance being Fe and inevitable impurities,
wherein 0.40 % < Al + Si < 1.05 % and Mn + Cr > 1.90 %,
and having a complex phase microstructure, in volume percent, comprising:
8-12 % retained austenite, 20 - 50 % bainite, less than 10 % martensite, the remainder being ferrite.

It has been found that a high strength steel strip according to the invention shows a combination of high strength and formability, in particular elongation and edge ductility. These favourable properties allow a steel strip according to the invention to be processed to complex shaped articles.

Regarding the composition, it has been found that a relatively high silicon content deteriorates the processability of the steel strip. Si is traditionally used to effectuate the TRIP effect, due to retardation of carbide formation in the presence of Si which leads to carbon enrichment and, hence, stabilisation of austenite at room temperature. The disadvantages of Si are that in very high quantities (above 0.4 wt. %) it interferes with the wettability of zinc, making galvanisation over traditional continuous annealing lines impossible. It has also been shown in the prior art, e.g. EP 1 889 935 A1, that Si can be replaced by relatively high quantities of Al. The present invention shows that the addition of Si can be omitted and Al kept to a minimum by careful selection of the Cr content and with the addition of Nb. In this case a strip is produced which has low hot-rolling loads allowing a wider and thinner dimensional capability. However, silicon is usually present in trace quantities due to manganese addition. For this reason, the maximum silicon content is set on 0.15 % Si. Above this amount of silicon, the rolling loads in the hot-strip mill are high. An amount of silicon below 0.15 % makes it possible to produce wide and thin steel strip.

Moreover, the composition of the steel strip according to the invention is such that the formability of the steel is good and no necking occurs, and that the edge ductility of pressed parts is such that no cracking occurs.

The reason for the amounts of the main constituting elements is as follows.
C: 0.13 - 0.19 mass %. Carbon has to be present in an amount that is high enough to ensure hardenability at the cooling rates available in a conventional annealing/galvanising line. Free carbon also enables stabilisation of austenite which delivers improved work hardening potential and good formability for the resulting strength level. A lower limit of 0.13 mass % is desired for these reasons. To ensure good weldability the maximum carbon level is 0.19 mass %.
Mn: 1.70 - 2.50 mass %. Manganese is added to increase hardenability within the cooling rate capability of a conventional continuous annealing/galvanising line. Manganese also contributes to solid solution strengthening which increases the tensile strength and strengthens the ferrite phase, thus helping to stabilise retained austenite. Manganese lowers the austenite to ferrite transformation temperature range of the complex phase steel, thus lowering the required annealing temperature to levels that can be readily attained in a conventional continuous annealing/galvanising line. A lower limit of 1.70 mass % is needed for the above reasons. A maximum level of 2.50 mass % is imposed to ensure acceptable rolling forces in the hot mill and to ensure acceptable rolling forces in the cold mill by ensuring sufficient transformation of the complex phase steel to soft transformation products (namely ferrite). This maximum level is also significant in view of the stronger segregation during casting and the forming of a band of martensite in the strip at higher values.
Al: 0.40 - 1.00 mass %. Aluminium is added to liquid steel for the purpose of de-oxidation. In the right quantity it also provides an acceleration of the bainite transformation, thus enabling bainite formation within the time constraints imposed by the annealing section of a conventional continuous annealing/galvanising line. Aluminium also retards the formation of carbides thus keeping carbon in solution thus causing partitioning to austenite during overaging, and promoting the stabilisation of austenite. A lower level of 0.40 mass % is required for the above reasons. A maximum level of 1.00 mass % is imposed for castability, since high aluminium contents lead to poisoning of the casting mould slag and consequently an increase in mould slag viscosity, leading to incorrect heat transfer and lubrication during casting.
Cr: 0.05 - 0.25 mass %. Chrome is added to increase hardenability. Chrome forms ferrite and suppresses the formation of carbides, thus enhancing the forming of retained austenite. A lower level of 0.05 mass % is required for the above reasons. A maximum level is 0.25 mass % to ensure satisfactory pickling of the steel strip, and to keep the cost of the strip sufficiently low. Furthermore, chromium retards the bainite transformation and therefore the addition of chromium is limited to allow formation of bainite during isothermal overaging.
Ca: max 0.004 mass %. The addition of calcium modifies the morphology of manganese sulphide inclusions. When calcium is added the inclusions get a globular rather than an elongated shape. Elongated inclusions, also called stringers, may act as planes of weakness along which lamellar tearing and delamination fracture can occur. The avoidance of stringers is beneficial for forming processes of steel sheets which entail the expansion of holes or the stretching of flanges and promotes isotropic forming behaviour. Calcium treatment also prevents the formation of hard, angular, abrasive alumina inclusions in aluminium deoxidised steel types, forming instead calcium aluminate inclusions which are softer and globular at rolling temperatures, thereby improving the material's processing characteristics. In continuous casting machines, some inclusions occurring in molten steel have a tendency to block the nozzle, resulting in lost output and increased costs. Calcium treatment reduces the propensity for blockage by promoting the formation of low melting point species which will not clog the caster nozzles.
P: max 0.10 mass %. Phosphorus interferes with the formation of carbides, and therefore some phosphorus in the steel is advantageous. However, phosphorus can make steel brittle upon welding, so the amount of phosphorus should be carefully controlled, especially in combination with other embrittling elements such as sulphur and nitrogen.

Sulphur and nitrogen are present in low amounts because these elements are detrimental for weldability.

Niobium is added in an amount between 0.01 and 0.05 mass % for grain refinement and formability. Niobium promotes transformation on the runout table and thus provides a softer and more homogeneous intermediate product. Niobium further suppresses formation of martensite at isothermal overaging temperatures, thereby promoting stabilisation of retained austenite.

The optional elements are mainly added to strengthen the steel.

In addition the reasons given above, the ranges for aluminium, chromium and manganese are chosen such that a correct balance is found to deliver complete transformation on the runout table to ensure a steel strip that can be cold rolled, and to provide a starting structure enabling rapid dissolution of carbon in the annealing line to promote hardenability and correct ferritic/bainitic transformation behaviour. Moreover, because aluminium accelerates and chromium decelerates the bainitic transformation, the right balance between aluminium and chromium has to be present to produce the right quantity of bainite within the timescales permitted by a conventional hot dip galvanising line with a restricted overage section.

Apart from the absolute contents of the elements as given above, also the relative amounts of certain elements are of importance.

Aluminium and silicon together should be maintained between 0.4 and 1.05 mass % to ensure suppression of carbides in the end product and stabilisation of a sufficient amount of austenite, with the correct composition, to provide a desirable extension of formability.

Manganese and chromium together should be above 1.90 mass % to ensure sufficient hardenability for formation of martensite and thus achievement of strength in a conventional continuous annealing line and hot dip galvanising line.

Preferably element C is present in an amount of 0.13 - 0.16 %. In this range the hardenability of the steel is optimal while the weldability of the steel is enhanced.

According to a preferred embodiment element Mn is present in an amount of 1.95 - 2.40 %, preferably in an amount of 1.95 - 2.30 %, more preferably in an amount of 2.00 - 2.20 %. A higher amount of manganese provides steel with a higher strength, so it is advantageous to raise the lower limit to 1.95 or even 2.00 mass % manganese. On the other hand, hot rolling and cold rolling of the steel is more difficult for higher amounts of manganese, so it is advantageous to have an upper limit to 2.40, 2.30 or even 2.20 mass % manganese.

Preferably element Si is present in an amount of 0.05 - 0.15 %. There is no objection to the presence of some Si in the steel, since Si ensures a better retardation of carbides during overaging which is advantageous for the formability of the steel.

According to a preferred embodiment element Al is present in an amount of 0.60 - 0.80 %. A raised level of aluminium has the same effect as a higher amount of silicon, but also improves the bainite formation. The preferred upper limit of aluminium is determined by improvement of the castability of the steel.

Preferably element Cr is present in an amount of 0.10 - 0.25 %. A raised lower level increases the hardenability of the steel.

According to a preferred embodiment element Nb is present in an amount of 0.01 - 0.04 %. As elucidated above, niobium improves the homogeneity of the intermediate product. The upper limit is mainly in consideration of the cost of niobium.

Preferably the steel has an ultimate tensile strength Rm of at least 750 MPa, more preferably an ultimate tensile strength Rm of at least 780 MPa. This strength can, due to the careful selection of the amounts of the elements present in the steel, be reached while the formability of a conventional complex phase steel is maintained.

According to a preferred embodiment the hot dip galvanised steel strip has an 0.2 % proof strength Rp of at least 580 MPa, preferably an 0.2 % proof strength Rp of at least 600 MPa. Also this strength can be reached due to the careful selection of the amounts of the elements present in the steel.

Preferably, the hot dip galvanised steel strip has a total elongation of at least 16 %. This is a high elongation which is also reached by the chosen presence of the elements in the steel.

According to a preferred embodiment the hot dip galvanised steel strip has a hole expansion coefficient of at least 30 % when Rm is 750 MPa and Rp is 600 MPa. This is a good hole expansion coefficient, as will be elucidated below. The hole expansion coefficient decreases with increasing strength.

Preferably the hot dip galvanised steel strip has an Erichsen cupping index of more than 10.0 mm when Rm is 750 MPa and Rp is 580 MPa. This is satisfactory for the usability of the steel. The Erichsen cupping index decreases with increasing strength.

Preferably the strip according to the invention has a bending angle ∥ (°) of 120° or more and/or a bending angle ⊥ (°) of 130° or more.

According to the invention the hot dip galvanised steel strip has a complex phase structure containing 8 - 12 % retained austenite, 20 - 50 % bainite, less than 10 % martensite, the remainder being a ferrite. If bainite fraction is above the upper limit, strengthening by ferrite may be insufficient for deep drawing. Preferably the hot dip galvanised steel strip according to the invention contains 20-40 % bainite. With such microstructures, a high elongation and a high strength can be reached.

According to a preferred embodiment the hot dip galvanised steel strip has an average grain size of at most 3 µm, more preferably less than 2 µm. This small grain size helps to achieve the above mentioned mechanical properties of the steel due to the so called Hall-Petch effect.

According to a second aspect of the invention there is provided a method for producing a high strength hot dip galvanised complex phase steel strip according to any one of the preceding claims, comprising the steps of:
- casting the steel into a steel slab;
- hot rolling the steel slab to strip having a predetermined thickness;
- subjecting the hot rolled strip to a quenching step of quenching to a temperature below the bainite start temperature and above the martensite start temperature ;
- coiling the strip thus quenched;
- cold rolling the strip;
- reheating the thus treated strip to a temperature in the temperature range between the Ac1 and the Ac3 temperature of the respective steel;
- cooling the reheated strip at a cooling rate such that retransformation to ferrite is avoided;
- isothermally overaging the cooled strip;
- hot dip galvanising the strip thus obtained.

In the method according to the invention a steel composition is prepared according to the invention as explained above and then casted into a slab, which is reduced in thickness in a hot-strip rolling mill. The hot rolled strip is subjected to a quenching step, wherein the strip is quenched at a high rate, e.g. generally above 25 °C , such as in the range of 30 - 50 °C/s, such as 40 °C/s, to a temperature below the bainite start temperature (the temperature at which the formation of bainite starts) and above the martensite start temperature (the temperature at which the formation of martensite starts), prior to coiling. Quenching and subsequent coiling are performed such that the formation of pearlite is avoided. In view of the composition and commonly used thicknesses of the strip this temperature is in the range of 500-600 °C. An intermediate structure is obtained comprising a fine grain sized ferrite, e.g. a grain size of less than 5 micrometers, as matrix with carbon rich bainite as second phase, whilst the formation of pearlite and martensite is avoided. The formation of either a single phase bainite structure and/or martensitic second phase would make the cold-rolling step very hard.

Avoidance of the formation of pearlite is significant, as pearlite influences the carbon distribution in subsequent steps. Upon annealing between Ac1 and Ac3 temperatures the two phase region (where austenite and ferrite co-exist), the first austenite will be formed from the carbon rich bainite because it has the highest amount of carbon available. The resulting austenite will have a high carbon content. Any remaining bainite will be carried over into the final microstructure using the above annealing conditions in the two-phase region. The distribution of carbon in the phases (austenite/ferrite) is believed to be bimodal. Strength is greatly enhanced due to the presence of the high carbon retained austenite. The work hardening capacity is excellent for shaping, like deep drawing and stamping. In the complex microstructure according to the invention the strengths of the individual phases match one another more evenly, thereby avoiding the risk of edge cracking in particular when the edge is subjected to stretching. Due to the quenching step the carbon will be more evenly distributed in the microstructure leading to a retained austenite having a lower carbon content. The formation of martensite can be avoided by selection of the overaging parameters. As the intermediate product has a small grain size and the process is carried out avoiding grain growth and dissolution of bainite, the final product will have a small grain size as well.

In this method, the deformation schedule during hot rolling, the finish rolling temperature is selected to achieve a microstructure in the hot rolled product which is conducive to further reduction of thickness in a cold mill. In particular attention can be paid to limiting the strength of the hot rolled strip so as to minimise the required cold rolling loads. The temperature in the annealing line can be chosen such that the steel strip comprises ferrite and austenite whilst avoiding dissolution and growth of the pre-existing bainite. The cooling rate should be such that in principle no ferrite is formed, and the isothermal overaging is applied to promote the enrichment of austenite through the formation of new bainite. Hot dip galvanising can be performed in the usual manner. During this method the temperature and duration of most steps is critical for the realisation of the desired balance between strength and ductility in the final product.

Preferably the annealing will be carried out a temperature between 750 °C and 850 °C and more preferably at a temperature between 780 °C and 820 °C, most preferably in the range of 780 - 800 °C. At these temperatures the steel strip comprises both ferrite and austenite. Using the above temperatures generally annealing is performed up to 2 minutes, preferably less than one minute.

Preferably, the overaging is applied at a temperature between 360 °C and 480 °C, more preferably in the range of 360 - 430 °C, advantageously for a duration of up to 10 minutes, with a preferred range being 30s to 120s.

As known to the skilled person, the iron-carbon eutectoid system has a number of critical transformation temperatures as defined below. These temperatures are dependent on chemistry and processing conditions:
A1 - temperature below which the microstructure is composed of a mixture of ferrite (alpha-Fe) and Fe3C;
A2 - Curie temperature: temperature above which the material ceases to be magnetic;
A3 - temperature above which the microstructure is entirely composed of austenite.

The suffixes c and r denote transformations in the heating and cooling cycle respectively.

The invention will be elucidated hereinafter; a number of compositions will be evaluated with regard to some well-known formability parameters that are elucidated first.

n-value: The work hardening coefficient or n-value is closely related to uniform elongation. In most sheet forming processes the limit of formability is determined by the resistance to local thinning or "necking". In uniaxial tensile testing necking commences at the extent of uniform elongation. n-value and uniform elongation derived from the tensile test can be taken as a measure of the formability of sheet steels. When aiming to improve formability of strip steels n-value and uniform elongation represent the most suitable optimisation parameters.

Hole expansion coefficient (HEC): To be successfully applied in industrial stamping operations, sheet metals must have a certain ability to withstand stretching of their sheared edges. This is tested in accordance with the international technical specification ISO/TS16630. A hole having a diameter of 10mm is made in the centre of a test piece having the dimensions 90 x 90mm. A cone punch of 40mm diameter with a 60° apex is forced into the hole while the piece is fixed with a die having an inner diameter of 55mm. The diameter of the hole is measured when a crack had extended through the thickness of the test piece. The maximum HEC was determined by: Max HEC % = ((Dh - Do)/Do) x 100, wherein Do is the original hole diameter and Dh is the diameter of the hole after cracking. Stretch flangeability is evaluated on the basis of the maximum HEC and is deemed satisfactory when HEC > 25%

Erichsen Index (EI): The Erichsen test describes the ability of metals to undergo plastic deformation in stretch forming and is tested in accordance with the international standard test ISO 20482:2003. A hemispherical punch is driven into a fully clamped sheet. As lubrication graphite grease is used on top of the punch. The punch travel is stopped when a through thickness crack is detected. Due to friction the fracture is not on top of the punch but to the side, so not in equi bi-axial strain but more towards plane strain. The depth of the punch penetration is measured. The value of the Erichsen cupping index (IE) is the average of a minimum of three individual measurements, expressed in millimetres and for the present invention is deemed satisfactory when EI > 10mm.

Three-point bending tests are carried out according to ISO7438-05. The bending test consists of submitting a test piece to plastic deformation by uniaxial bending until either a specified angle of bending is reached or until cracking occurs, which can either be detected visually or by means of a force drop-off. When a minimum bending angle is required then the test is carried out up to the specified minimum angle and the test-piece is examined for cracking and/or failure. Where no bending angle is specified, the bending test is carried out until a pre-specified drop in the force is experienced. The bending angle at maximum force is then calculated by means of the bending punch stroke, as outlined in Appendix A of VDA specification 238-100.

One of the aims of the present invention is to provide a high strength hot dip galvanised steel strip that has an edge ductility in the range of a 800MPa CP hot dip galvanised steel strip, but having improved ductility properties.

During the development of the high strength hot dip galvanised steel strip according to the invention a number of coils of strip have been produced along with comparative examples. The chemical composition of the different alloys is presented in Table 1, as well as the processing conditions. The resulting microstructure and mechanical properties are given in Table 2. In Table 2 RA indicates retained austenite, M indicates martensite, B represents bainite and F indicates ferrite.

Alloys having a composition as indicated were prepared, casted and hot rolled to a strip having a predetermined thickness (between 3 and 4 mm) in a hot roll mill. The hot rolled strip was quenched at a quenching rate of about 50 °C/s and then coiled at the temperature indicated in Table 1 below bainite start temperature (Bs; about 600 °C). Then the strip was annealed and subsequently overaged at the temperatures indicated.

**Table 1**

| Alloy | Chemical composition, wt% | | | | | | Coiling temperature, °C | Annealing temperature, °C | Isothermal holding temperature, °C |
|---|---|---|---|---|---|---|---|---|---|
| | C | Mn | Al | Cr | Nb | Si | | | |
| A | 0.154 | 1.66 | 0.57 | 0.4 | - | 0.12 | 600 | 800 | 420 |
| C1 | 0.156 | 2.054 | 0.729 | 0.105 | 0.021 | 0.06 | 600 | 780 | 365 |
| C2 | | | | | | | 600 | 780 | 410 |
| C3 | | | | | | | 550 | 820 | 440 |
| C4 * | | | | | | | 550 | 780 | 365 |
| C5 * | | | | | | | 550 | 780 | 410 |
| D | 0.151 | 1.73 | 0.58 | 0.11 | - | 0.41 | 600 | 800 | 420 |
| E1 | 0.15 | 1.88 | 0.61 | 0.519 | 0.022 | 0.43 | 650 | 830 | 420 |
| E2 | | | | | | | 550 | 830 | 420 |
| F1 | 0.155 | 2.027 | 0.707 | 0.092 | 0.02 | 0.057 | 620 | 780 | 400 |
| F2 | | | | | | | 620 | 780 | 410 |
| F3 * | | | | | | | 550 | 790 | 400 |
| F4 * | | | | | | | 550 | 790 | 410 |
| F5 * | | | | | | | 550 | 790 | 410 |
| F6 * | | | | | | | 550 | 790 | 430 |
| G1 | 0.13 | 2.04 | 0.03 | 0.55 | - | 0.25 | 650 | 875 | 420 |
| G2 | | | | | | | 650 | 830 | 420 |
| G3 | | | | | | | 650 | 875 | 460 |

| | | | | | | | | | |
|---|---|---|---|---|---|---|---|---|---|
| * = according to the invention | | | | | | | | | |

**Table 2**

| Alloy | Rp, MPa | Rm, MPa | Ag, % | A80, % | n-value | HEC, % | El, mm | Bending angle, ∥, ° | Bending angle, ⊥, ° | Phase fractions, % | | | |
|---|---|---|---|---|---|---|---|---|---|---|---|---|---|
| | | | | | | | | | | F | B | M | RA |
| A | 345 | 701 | 18.8 | 23.4 | 0.21 | | | | | 71 | 10 | 7 | 12 |
| C1 | 450 | 739 | 17.2 | 23.2 | 0.18 | | | | | 82 | 0 | 8 | 10 |
| C2 | 511 | 762 | 15.3 | 20.7 | 0.16 | | | | | 77 | 5 | 9 | 9 |
| C3 | 524 | 791 | 14.7 | 18.1 | 0.17 | 33 | 10.1 | | | 75 | 5 | 11 | 9 |
| C4 | 624 | 849 | 13.7 | 16.2 | 0.15 | 30 | 10.1 | 124 | 131 | 52 | 30 | 9 | 9 |
| C5 | 605 | 799 | 16.2 | 20.7 | 0.18 | 30 | 10.4 | 140 | 146 | 50 | 30 | 9 | 11 |
| D | 442 | 702 | 21.3 | 26.6 | 0.24 | | | | | 50 | 40 | 5 | 5 |
| E1 | 427 | 772 | 14.7 | 20.8 | 0.16 | 25 | 9.5 | 108 | 105 | 80 | 0 | 10 | 10 |
| E2 | 449 | 835 | 13.4 | 18.6 | 0.15 | 20 | 9.2 | | | 75 | 0 | 15 | 10 |
| F1 | 471 | 787 | 15.0 | 20.7 | 0.15 | | | | | 77 | 5 | 9 | 9 |
| F2 | 496 | 795 | 15.3 | 20.1 | 0.16 | 22 | 9.5 | | | 74 | 5 | 12 | 9 |
| F3 | 586 | 829 | 13.6 | 17.9 | 0.14 | | | 126 | 137 | 59 | 20 | 9 | 12 |
| F4 | 615 | 826 | 15.0 | 19.7 | 0.16 | | | 135 | 141 | 57 | 30 | 3 | 10 |
| F5 | 613 | 837 | 13.3 | 17.3 | 0.15 | | | | | 57 | 30 | 4 | 9 |
| F6 | 607 | 822 | 15.7 | 20.2 | 0.16 | | | | | 44 | 40 | 6 | 10 |
| G1 | 595 | 868 | 6.8 | 10.0 | - | | | 85 | | 55 | 40 | 5 | 0 |
| G2 | 568 | 890 | 8.9 | 12.8 | - | | | 65 | | 60 | 20 | 20 | 0 |
| G3 | 549 | 907 | 7.8 | 10.0 | - | | | 100 | | 60 | 20 | 20 | 0 |

Alloys C and F have a chemical composition according to the invention. Alloy compositions A, D, E and G mainly differ from the chemical composition in Cr and/or Si levels. Alloys C4-5 and F3-6 are processed according to the invention resulting in a Rp > 600 MPa, Rm > 780 MPa, Ag > 13%, A80 > 16%, and where data available HEC > 30 %, bending angle ∥ > 120° and bending angle ⊥ > 130°, being a favourable set of properties.

## Claims

1. High strength hot dip galvanised complex phase steel strip consisting, in mass percent, of the following elements:
0.13 - 0.19 % C
1.70 - 2.50 % Mn
max 0.15 % Si
0.40 - 1.00 % Al
0.05 - 0.25 % Cr
0.01 - 0.05 % Nb
max 0.10 % P
max 0.004 % Ca
max 0.05 % S
max 0.007 % N
and optionally at least one of the following elements:
max 0.50 % Ti
max 0.40 % V
max 0.50 % Mo
max 0.50 % Ni
max 0.50 % Cu
max 0.005 % B
the balance being Fe and inevitable impurities,
wherein 0.40 % < Al + Si < 1.05 % and Mn + Cr > 1.90 %,
and having a complex phase microstructure, in volume percent, comprising 8-12 % retained austenite, 20 - 50 % bainite, less than 10 % martensite, the remainder being ferrite.

2. Steel strip according to claim 1, wherein element C is present in an amount of 0.13-0.16 %.

3. Steel strip according to claim 1 or 2, wherein element Mn is present in an amount of 1.95 - 2.40 %, preferably in an amount of 1.95 - 2.30 %, more preferably in an amount of 2.00 - 2.20 %.

4. Steel strip according to claim 1, 2 or 3, wherein element Si is present in an amount of 0.05 - 0.15 %.

5. Steel strip according to any one of the preceding claims, wherein element Al is present in an amount of 0.60 - 0.80 %.

6. Steel strip according to any one of the preceding claims, wherein element Cr is present in an amount of 0.10 - 0.25 %.

7. Steel strip according to any one of the preceding claims, wherein element Nb is present in an amount of 0.01 - 0.04 %.

8. Steel strip according to any one of preceding claims, wherein the complex phase microstructure of the hot dip galvanised steel strip comprises 20-40 % bainite.

9. Steel strip according to any one of the preceding claims, wherein the hot dip galvanised steel strip has an average ferrite grain size of at most 3 µm, preferably 2 µm or less.

10. Method for producing a high strength hot dip galvanised complex phase steel strip according to any one of the preceding claims, comprising the steps of:
• casting the steel into a steel slab;
• hot rolling the steel slab to strip having a predetermined thickness;
• subjecting the hot rolled strip to a quenching step of quenching to a temperature below the bainite start temperature and above the martensite start temperature;
• coiling the strip thus quenched;
• cold rolling the strip;
• reheating the thus treated strip to a temperature in the temperature range between the Ac1 and the Ac3 temperature of the respective steel;
• cooling the reheated strip at a cooling rate such that retransformation to ferrite is avoided;
• isothermally overaging the cooled strip;
• hot dip galvanising the strip thus obtained.

11. Method according to claim 10, wherein the quenching step comprises quenching of the hot rolled steel strip to a temperature in the range of 500 - 600 °C, preferably at a quenching rate of at least 25 °C/min.

12. Method according to any one of the preceding claims 10-11, wherein the annealing is applied at a temperature between 750° C and 850° C, preferably between 780°C and 820°C, most preferably in the range of 780 - 800 °C.

13. Method according to any one of the preceding claims 10-12, wherein the annealing is performed on the strip for up to 2 minutes, preferably for less than one minute.

14. Method according to any one of the preceding claims 10-13, wherein the quenching rate of the reheated strip is at least 25 °C/min.

15. Method according to any one of the preceding claims 10-14, wherein the overaging is applied at a temperature between 360° C and 480° C, more preferably in the range of 360 - 430 °C, preferably for a period of time of 10 minutes, more preferably for 30s to 120s.

## Patentansprüche

1. Hochfestes feuerverzinktes Complexphasen-Stahlband, das, in Gewichtsprozent, aus den folgenden Elementen besteht:
0,13 - 0,19%C
1,70 - 2,50 % Mn
marx. 0,15 % Si
0,40 - 1,00 % Al
0,05 - 0,25 % Cr
0,01 - 0,05 % Nb
max. 0,10 % P
max. 0,004 % Ca
max. 0,05 % S
max 0.007 % N
und wahlweise aus mindestens einem der folgenden Elemente:
max. 0,50 % Ti
max. 0,40 % V
max. 0,50 % Mo
max. 0,50 % Ni
max. 0,50 % Cu
max. 0,005 % B
wobei der Rest aus Fe und unvermeidbaren Fremdstoffen besteht,
wobei 0,40 % < Al + Si < 1,05 % und Mn + Cr > 1,90 % sind, und das eine Complexphasen-Mikrostruktur aufweist, umfassend, in Volumenprozent, 8 - 12 % Restaustenit, 20 - 50 % Bainit, weniger als 10 % Martensit, und wobei die verbleibende Menge Ferrit ist.

2. Stahlband nach Anspruch 1, wobei Element C in einer Menge von 0,13 - 0,16 % vorhanden ist.

3. Stahlband nach Anspruch 1 oder 2, wobei Element Mn in einer Menge von 1,95 - 2,40 %, bevorzugt in einer Menge von 1,95 - 2,30 %, stärker bevorzugt in einer Menge von 2,00 - 2,20 %, vorhanden ist.

4. Stahlband nach Anspruch 1, 2 oder 3, wobei Element Si in einer Menge von 0,05 - 0,15 % vorhanden ist.

5. Stahlband nach einem beliebigen der vorhergehenden Ansprüche, wobei Element Al in einer Menge von 0,60 - 0,80 % vorhanden ist.

6. Stahlband nach einem beliebigen der vorhergehenden Ansprüche, wobei Element Cr in einer Menge von 0,10 - 0,25 % vorhanden ist.

7. Stahlband nach einem beliebigen der vorhergehenden Ansprüche, wobei Element Nb in einer Menge von 0,01 - 0,04 % vorhanden ist.

8. Stahlband nach einem beliebigen der vorhergehenden Ansprüche, wobei die Complexphasen-Mikrostruktur des feuerverzinkten Stahlbandes 20 - 40 % Bainit umfasst.

9. Stahlband nach einem beliebigen der vorhergehenden Ansprüche, wobei das feuerverzinkte Stahlband eine durchschnittliche Ferritkorngröße von maximal 3 µm, bevorzugt von 2 µm oder weniger, aufweist.

10. Verfahren für das Herstellen eines hochfesten feuerverzinkten Complexphasen-Stahlbands nach einem beliebigen der vorhergehenden Ansprüche, das folgende Schritte umfasst:
• Gießen des Stahls in eine Bramme,
• Heißwalzen der Bramme in ein Stahlband von vorgegebener Stärke,
• Unterziehen des heißgewalzten Stahlbands einem Abschreckungsschritt auf eine unter der Bainit-Starttemperatur und über der Martensit-Starttemperatur liegende Temperatur,
• Aufwickeln des auf diese Weise abgeschreckten Stahlbands,
• Kaltwalzen des Stahlbands,
• Aufwärmen des so behandelten Stahlbands auf eine im Temperaturbereich zwischen der Ac1- und der Ac3-Temperatur des betreffenden Stahls liegende Temperatur,
• Kühlen des aufgewärmten Stahlbands mit einer Abkühlgeschwindigkeit dergestalt, dass eine Rücktransformation zu Ferrit vermieden wird,
• isothermisches Überaltern des gekühlten Stahlbands,
• Feuerverzinken des so gewonnenen Stahlbands.

11. Verfahren nach Anspruch 10, wobei der Abschreckungsschritt das Abschrecken des heißgewalzten Stahlbands auf eine im Bereich von 500 - 600 °C liegende Temperatur, bevorzugt mit einer Abkühlgeschwindigkeit von mindestens 25 °C/min, umfasst.

12. Verfahren nach einem der vorhergehenden Ansprüche 10 - 11, wobei das Glühen bei einer Temperatur zwischen 750 °C und 850 °C, bevorzugt zwischen 780 °C und 820 °C, am stärksten bevorzugt im Bereich von 780 - 800 °C, angewendet wird.

13. Verfahren nach einem der vorhergehenden Ansprüche 10 - 12, wobei das Glühen an dem Stahlband bis zu 2 Minuten lang, bevorzugt weniger als 1 Minute lang, vorgenommen wird.

14. Verfahren nach einem der vorhergehenden Ansprüche 10 - 13, wobei die Abkühlgeschwindigkeit des aufgewärmten Stahlbands mindestens 25 °C/min beträgt.

15. Verfahren nach einem der vorhergehenden Ansprüche 10 - 14, wobei das Überaltern bei einer Temperatur zwischen 360 °C und 480 °C, stärker bevorzugt im Bereich von 360 - 430 °C, bevorzugt über einen Zeitraum von 10 Minuten, stärker bevorzugt 30 bis 120 Sekunden lang, vorgenommen wird.

## Revendications

1. Bande d'acier haute résistance, à phase complexe et galvanisée à chaud, comprenant, en pourcentage massique, les éléments suivants :
0,13 à 0,19% de C
1,70 à 2,50 % de Mn
max 0,15 % de Si
0,40 à 1,00 % de Al
0,05 à 0,25 % de Cr
0,01 à 0,05 % de Nb
max 0,10 % de P
max 0,004 % de Ca
max 0,05 % de S
max 0,007 % de N
et éventuellement au moins l'un des éléments suivants :
max 0,50 % de Ti
max 0,40 % de V
max 0,50 % de Mo
max 0,50 % de Ni
max 0,50 % de Cu
max 0,005 % de B
le complément étant constitué de Fe et des inévitables impuretés,
avec 0,40 % < Al + Si < 1,05 % et Mn + Cr > 1,90 %, et présentant une microstructure à phase complexe, en pourcentage volumique, comprenant 8 à 12 % d'austénite résiduelle, 20 à 50 % de bainite, moins de 10 % de martensite, le reste étant constitué de ferrite.

2. Bande d'acier selon la revendication 1, dans laquelle l'élément C est présent en quantité de 0,13 à 0,16 %.

3. Bande d'acier selon la revendication 1 ou 2, dans laquelle l'élément Mn est présent en quantité de 1,95 à 2,40 %, de préférence en quantité de 1,95 à 2,30 %, plus préférablement en quantité de 2,00 à 2,20 %.

4. Bande d'acier selon la revendication 1, 2 ou 3, dans laquelle l'élément Si est présent en quantité de 0,05 à 0,15 %.

5. Bande d'acier selon l'une quelconque des revendications précédentes, dans laquelle l'élément Al est présent en quantité de 0,60 à 0,80 %.

6. Bande d'acier selon l'une quelconque des revendications précédentes, dans laquelle l'élément Cr est présent en quantité de 0,10 à 0,25 %.

7. Bande d'acier selon l'une quelconque des revendications précédentes, dans laquelle l'élément Nb est présent en quantité de 0,01 à 0,04 %.

8. Bande d'acier selon l'une quelconque des revendications précédentes, dans laquelle la microstructure à phase complexe de la bande d'acier galvanisée à chaud comprend 20 à 40 % de bainite.

9. Bande d'acier selon l'une quelconque des revendications précédentes, dans laquelle la bande d'acier galvanisée à chaud présente une taille de grain de ferrite moyenne de maximum 3 µm, de préférence de 2 µm ou moins.

10. Procédé de production d'une bande d'acier haute résistance, à phase complexe et galvanisée à chaud selon l'une quelconque des revendications précédentes, comprenant les étapes de :
• coulée de l'acier en une brame d'acier ;
• laminage à chaud de la brame d'acier en une bande ayant une épaisseur prédéterminée ;
• soumission de la bande laminée à chaud à une étape de trempe de refroidissement consistant à refroidir à une température inférieure à une température de démarrage de la bainite et supérieure à la température de démarrage de la martensite ;
• bobinage de la bande ainsi trempée ;
• laminage à froid de la bande ;
• réchauffage de la bande ainsi traitée à une température dans la plage de températures entre les températures Ac1 et Ac3 de l'acier respectif ;
• refroidissement de la bande rechauffée à un taux de refroidissement de sorte qu'une retransformation en ferrite est évitée ;
• survieillissement isotherme de la bande refroidie ;
• galvanisation à chaud de la bande ainsi obtenue.

11. Procédé selon la revendication 10, dans lequel l'étape de trempe de refroidissement comprend la trempe de la bande d'acier laminée à chaud à une température dans la plage de 500 à 600° C, de préférence à un taux de refroidissement d'au moins 25° C/min.

12. Procédé selon l'une quelconque des revendications précédentes 10 à 11, dans lequel le recuit est appliqué à une température entre 750° C et 850° C, de préférence entre 780° C et 820° C, plus préférablement dans la plage de 780 à 800° C.

13. Procédé selon l'une quelconque des revendications précédentes 10 à 12, dans lequel le recuit est effectué sur la bande pendant jusqu'à 2 minutes, de préférence pendant moins d'une minute.

14. Procédé selon l'une quelconque des revendications précédentes 10 à 13, dans lequel le taux de refroidissement de la bande réchauffée est d'au moins 25° C/min.

15. Procédé selon l'une quelconque des revendications précédentes 10 à 14, dans lequel le survieillissement est appliqué à une température entre 360° C et 480° C, plus préférablement dans la plage de 360 à 430° C, préférablement pendant un laps de temps de 10 minutes, plus préférablement pendant 30 s à 120 s.
